# EUROPEAN PATENT APPLICATION

(11) **EP 3 360 641 A1**
(43) Date of publication of application: **15.08.2018**
(21) Application number: 17155471.0
(22) Date of filing: 09.02.2017
(51) Int. Cl.: B23K 35/30, B23K 35/36, B23K 35/362, B23K 35/02, C22C 38/00, C22C 38/02, C22C 38/38, C22C 38/44, C22C 38/58, B23K 103/04

(54) **AGGLOMERATED WELDING FLUX AND SUBMERGED ARC WELDING PROCESS OF AUSTENITIC STAINLESS STEELS USING SAID FLUX**

(71) Applicant: Oerlikon Schweisstechnik GmbH, 67304 Eisenberg/Pfalz (DE)
(72) Inventor: STARCK, Stephan, 67269 GRUENSTADT (DE)
(74) Representative: Grosse Schumacher Knauer von Hirschhausen

(57) **Abstract**

The invention relates to agglomerated welding flux comprising, expressed in % by weight of flux : 25 to 35% MgO, 20 to 28% CaF₂, 15 to 22% Al₂O₃, 12 to 17% SiO₂, and 0,2 to 0,4% carbon (% by weight), said carbon being introduced using at least one metallic compound contained in the flux. The invention also relates to a process for the submerged-arc welding of at least one workpiece made of austenitic stainless steel using said flux and to a welded joint comprising 17 to 20 % Cr, 5 to 8,5% Mn, and 14 to 18% Ni that can be obtained using said process.

## Description

The invention relates to a welding flux for the submerged-arc welding of austenitic stainless steels, and also to a submerged-arc welding process using this flux, and to a weld metal composition (i.e. a welded joint) obtained by melting said flux and a consumable welding wire and welding one or more workpieces made of austenitic stainless steel.

Austenitic stainless steels exhibit a combination of highly desirable properties that make them useful for a wide variety of industrial applications. These steels possess a balanced analysis of chromium and austenite promoting and stabilizing elements in iron and have an austenitic structure at room temperature. The austenitic structure and high chromium content both contribute to corrosion resistance and the relatively uniform austenitic structure also provides the steel with good strength and toughness properties, mainly due to the high contents of chromium (Cr), nickel (Ni) and manganese (Mn), which make them particularly attractive as construction materials.

In particular, austenitic stainless steels, having a typical Ni content of at most 9 %, and a Chromium content of about 19% are especially suited for vessels which can be used at cryogenic temperatures, typically below -170°C (-270°F) for the storage of liquefied hydrocarbon gases (LNG) or liquefied air components like oxygen or nitrogen.

As nickel is an expensive constituent, there is a high interest to decrease the nickel content in austenitic stainless steel, but at the same time to maintain the possibility of its use for cryogenic purposes. An example of such a low-nickel austenitic stainless steel is the 201LN grade (ASTM A240 international standards).

Typical ranges of contents for the metallurgical composition of such a low-nickel austenitic stainless steel, i.e. the composition of the base metal constituting this steel, is given in Table 1 below.

**Table 1: Composition (in wt%) of the base metal 201LN (ASTM A240)**

| C | Mn | Si | Cr | Ni | N | Cu | S | P |
|---|---|---|---|---|---|---|---|---|
| 0,00 | 6,4 | 0,00 | 16 | 4,0 | 0,01 | 0,00 | 0,00 | 0,00 |
| to | to | to | to | to | to | to | to | to |
| 0,03 | 7,5 | 0,75 | 18 | 5,0 | 0,25 | 1,0 | 0,03 | 0,045 |

These low-nickel austenitic stainless steels are conventionally welded by carrying out submerged-arc welding (hereinafter called "SA welding") processes using a welding flux and a wire which are melted by an electric arc, thus supplying filler metal so as to form the desired welded joint.

The work pieces to be welded may be sheets, plates, forgings or pipes.

A problem that is faced is that, generally, if austenitic steel is SA welded, the crystalline structure of the weld metal will be coarse, because of the very high amount of heat used in this process, and the tensile strength of the weld metal will be relatively lower as compared to that obtained with other welding processes.

However, the construction industry requires that the tensile strength (also called ultimate tensile strength) of the weld metal to be higher than the tensile strength of the base metal, and in particular that the tensile strength of the weld metal be comprised between 655 and 740 MPa at 20 °C. The minimum tensile strength of ASTM 201LN is defined as 655 MPa (95ksi). The tensile strength is important for the design of a pressure vessel. For a given design, the wall thickness is defined by the minimum tensile strength. For economic reasons, the wall thickness is selected as low as possible; hence the plate material and the weld metal have to meet the minimum tensile strength of the standard. In addition, there are requirements in terms of minimum toughness of the weld metal, typically at least 47 J at -196 °C. If these level requirements are not met, this is deleterious to the integrity of the structures thus welded.

Up to now, no appropriate solution was proposed to obtain a weld metal having these mechanical properties.

Hence, one problem to be solved is to provide an agglomerated welding flux that makes it possible to obtain a welded joint having the required levels of tensile strength and toughness when welding low-nickel austenitic stainless steels by an SA welding process.

According to a first aspect, the invention relates to an agglomerated welding flux comprising, expressed in % by weight of flux :
- 25 to 35% magnesium oxide (MgO),
- 22 to 35% calcium fluoride (CaF₂),
- 15 to 22% aluminum oxide (Al₂O₃),
- 11 to 17% silicon dioxide (SiO₂),
- at least one metallic compound containing carbon, and
- 0,2 to 0,4% carbon, said carbon being introduced using said least one metallic compound.

Depending on the case, the flux of the invention may comprise one or more of the following features:
- said metallic compound comprises 2 to 12% carbon.
- the flux comprises 1,6 to 10% of said metallic compound.
- said metallic compound is a ferroalloy.
- the flux comprises at least one metallic compound chosen among: ferrochromium, ferromanganese, cast iron, silicium carbide powder.

According to a second aspect, the invention relates to a process for the submerged-arc welding of at least one workpiece made of austenitic stainless steel, in which a consumable wire and a flux are melt by an electric arc to obtain a welded joint on said at least one workpiece, characterized in that the flux is an agglomerated welding flux according to the invention.

Preferably, the consumable wire comprises, expressed in % by total weight of wire:
- 0,01 to 0,05% carbon (C),
- 0,1 to 1% silicon (Si),
- 5 to 9% manganese (Mn),
- 19 to 22% chromium (Cr),
- 15 to 18% nickel (Ni),
- 2,5 to 4,5% molybdenum (Mo),
- 0,1 to 0,2% nitrogen (N), and
- iron (Fe) for the rest.

The work piece may comprise, expressed in % by weight of workpiece:
- 16 to 18% Cr,
- 6,4 to 7,5% Mn, and
- 4,0 to 5,0% Ni.

The workpiece may further comprise, expressed in % by weight of workpiece:
- 0,01 to 0,03 % C,
- 0,1 to 0,75 % Si,
- 0,01 to 0,025% N, and
- iron (Fe) for the rest.

According to a third aspect, the invention relates to a welded joint that can be obtained by the welding process according to the invention, characterized in that it comprises, expressed by weight of joint :
- 17 to 20 % Cr,
- 5 to 8,5% Mn, and
- 14 to 18% Ni.

Preferably, the welding joint according to the invention further comprises, expressed in % by weight of workpiece:
- 0,09 to 0,13 % C,
- 0,3 to 0,7% Si,
- 2 to 4% Mo,
- 0,1 to 0,25% N, and
- iron (Fe) for the rest.

The welding joint may have a tensile strength of between 650 and 700 MPa at 20 °C. and/or a minimum toughness of 27 J at -196 °C.

According to a fourth aspect, the invention relates to a workpiece made of austenitic stainless steel comprising 16 to 18% Cr, 4,0 to 5,0% Ni, 6,4 to 7,5% Mn and iron, characterized in that it comprises at least one welded joint according to the invention.

The term "agglomerated flux" is understood to mean that the flux is formed from particles or small granules predominantly composed of mineral substances, for example aluminum oxide or silicon oxide, and possibly metal compounds in powder form to which a binder (or binders) based on an aqueous inorganic silicate, for example a sodium silicate, is added. All substances including the possible powder like metal compounds form the composition of the flux. All compounds and substances present are agglomerated with one another and form the flux grains. The final flux grains are predominantly round in shape and have a grain size comprised predominantly between 0,2 and 2,0 mm.

It should be noted that the carbon present in the flux can be analyzed by infrared absorption, while the elements Mg, Al, Si, F can be analyzed by XRF (X-ray fluorescence). The elements Mg, Al can be analyzed as well by ICP-AES, F can be analyzed by ion sensitive electrodes after vapor extraction. As it is known that the elements such as Mg, Al and Si are present as oxides, they are usually expressed as oxides such as MgO, Al2O3 and SiO2. As it is known that F is predominantly present as CaF it is expressed as CaF. Ca can be analysed as well by XRF or ICP- AES (inductively-coupled plasma atomic emission spectrophotometry) and/or by ICP-MS (inductively-coupled plasma mass spectroscopy). All Ca which can be stoechimetrically attributed to F is expressed as CaF2. The remaining Ca is expressed as CaO. Si can be as well analyzed gravimetrically.

According to a second aspect, the invention relates to a process for the submerged-arc (SA) welding of at least one work piece made of austenitic stainless steel, in which a consumable wire and a flux are melt by an electric arc to obtain a welded joint on said at least one workpiece, characterized in that the flux is according to the invention.

Depending on the case, the welding process of the invention may comprise one or more of the following features: see claims 7 to 9.

In particular, the process according to the invention may use a consumable wire comprising, expressed in % by total weight of wire:
- maximum (i. e. at most) 0,03% carbon (C), preferably between 0,01% and 0,03% C,
- maximum 1,0% silicon (Si), preferably between 0,1% and 1,0% Si,
- 5 to 9% manganese (Mn),
- 19 to 22% chromium (Cr),
- 15 to 18% nickel (Ni),
- 2,5 to 4,5% molybdenum (Mo),
- 0,1 to 0,2% nitrogen (N),
- maximum 0,5% copper (Cu), preferably between 0,03% and 0,5% Cu
- maximum 0,03%phosphorus (P), preferably between 0,005% and 0,03% P,
- maximum 0,02%sulfur (S), preferably between 5 ppm_and 0,02% S, and
- iron (Fe) for the rest.

All elements can be analyzed by OES (Optical Emission Spectrometry); C and S can be analyzed by infrared absorption. N can be analyzed by katharometry (thermal conductivity). Si can be analyzed as well gravimetrically; Mn,Cr, Ni, Mo can be as well analysed by ICP- AES (inductively-coupled plasma atomic emission spectrophotometry).

According to a third aspect, the invention relates to a welded joint, i.e. the deposited weld metal, in particular obtained by implementing said SA welding process according to the invention, characterized in that it comprises, expressed by weight of joint: see claim 10.

Depending on the case, the welded joint of the invention may comprise one or more of the following features: see claims 11 to 13.

The chemical analysis of the deposited metal is carried out on the axis of the joint.

The carbon may be analyzed by infrared absorption, the nitrogen by katharometry, the manganese, chromium, molybdenum and nickel by OES (optical emission spectroscopy) and the other elements by ICP-AES and/or ICP-MS. Silicon can be analyzed gravimetricaly.

According to a fourth aspect, the invention relates to a workpiece made of austenitic stainless steel, said workpiece comprising 16 to 18% Cr, 4,0 to 5,0 % Ni, 6,4 to 7,5 % Mn and iron, characterized in that it comprises at least one welded joint according to the invention.

Preferably, the workpiece is a pipe, a plate or a forging.

The present invention will be better understood by virtue of the following explanations dealing with the influence of the various elements present in flux (all % by weight).

### Magnesium oxide (MgO)

MgO increases the viscosity of the slag and allows obtaining a uniform bead. In addition, it controls the oxygen content in the weld metal. A MgO content lower than 25% in the flux increases the oxygen content and the toughness of the weld metal. On the other hand, a MgO content higher than 35% leads to an unstable arc, a non uniform bead and a poor slag removal.

### Calcium fluoride (CaF₂)

CaF₂ allows obtaining a uniform bead and controls the quantity of hydrogen and oxygen that may diffuse in the weld metal. When the CaF₂ content is lower than 20%, the toughness decreases due to the higher oxygen content in the weld metal. On the other hand, when the CaF₂ content is higher than 28%, the arc is unstable, the form of the bead is bad and the slag removal is poor.

### Aluminum oxide (Al₂O₃)

Al₂O₃ improves the fluidity of the slag and the bead uniformity. A Al₂O₃ content lower than 15% has little effect on these improvements, whereas a Al₂O₃ content higher than 22% decreases the toughness due to a higher oxygen content in the weld metal.

### Silicon dioxide (SiO₂)

SiO₂ improves the fluidity of the slag and the bead uniformity. A SiO₂ content lower than 12% has little effect on these improvements. But when the SiO₂ content is higher than 17%, the toughness properties are degraded due to the higher oxygen content in the weld metal.

### Carbon (C)

Carbon is added to the flux to ensure the high tensile properties of the weld metal. According to the invention, carbon is introduced using at least one carbon-containing metallic compound in the flux. Hence, during the SA welding process, the carbon is transferred in the weld metal so as to increase the tensile strength of the weld metal.

The introduction of carbon in the metallic form is advantageous because it does not decompose during the flux baking process. The at least one metallic compound transfers the carbon into the weld pool in the needed quantity and in a predictable way. In contrast, compounds that are not in the metallic form, for example graphite (C), will decompose during the baking process and hence will not transfer carbon in a predictable way and in the necessary quantity.

A too high content of C in the joint, i.e. in the deposited metal, leads to a hard structure of the martensite type and/or to an excessive amount of carbide precipitates which harden the structure, resulting in a poor toughness. Conversely, a too low C content results in insufficient tensile mechanical properties. Hence, it is necessary to respect, in the flux, an amount of C of between 0,2 and 0,4%.

Preferably, the at least one metallic compound is a ferroalloy, which is advantageously chosen in the group formed by ferromanganese, ferrochromium, cast iron powder, silicium carbide powder. The use of a ferroalloy is particularly advantageous because it does not decompose during the flux baking process. The carbon containing ferroalloy transfers the carbon into the weld pool in a predictable way. In contrast, graphite (C) will decompose during the baking process and hence will not transfer carbon in a predictable way. Carbonates like calcium carbonate (CaCO₃) do contain carbon as well but during the welding process they decompose into a metal oxide like CaO and a mixture of CO and CO₂. Both components are in the gaseous form and will not transfer carbon into the weld pool in the necessary quantity.

In the field of the invention, a ferroalloy refers to an alloy with more than 1% of carbon and one or more elements like iron, manganese, chromium, or silicon. A ferroalloy with carbon less than 2% will demand a quantity above 10% of that ferroalloy inside the flux. However if a quantity of more than 20 % of a ferroalloy is added to a flux the welding properties of the flux itself will become very poor.

Advantageously, the ferroalloy is a carbureted ferroalloy ("*ferroalliage carburé*" in French), having a high carbon content, that is to say 4 to 12% carbon, preferably at least 5% carbon, and preferably less than 10% carbon (% by weight). The higher the carbon content inside the alloy, the less of the component needs to be added. The less alloy addition, the better the welding properties. On the other hand, if the carbon content of the alloy exceeds 12%, the graphite will precipitate inside the alloy. And as we use only alloy ground to very fine powder we could see graphite inside the mixture. However, graphite should be avoided because it can oxidize during the baking process. The welding process will thus become unpredictable.

The ferroalloy may be a carbureted ferromanganese (*"ferromanganèse carburé"* in French), also called high-carbon ferromanganese. Preferably, the ferromanganese comprises 75 to 80% Mn and 5 to 9% C, more preferably between 6 to 8% C (% by weight).

The ferroalloy may also be a carbureted ferrochromium (*"ferrochrome carburé"* in French), containing 64 to 90% Cr and 4 to 12% C, more preferably between 6 to 9% C (% by weight).

According to another embodiment of the invention, the at least one carbon-containing metallic compound may be cast iron powder. Preferably, cast iron powder contains 2 to 4% carbon (% by weight). Cast iron offers the advantages of having no additions of chromium or manganese.

According to another embodiment of the invention, the at least one metallic compound may be silicium carbide.

Preferably, the AS welding process according to the invention is carried out by melting a flux as described above and a welding wire having the following composition (weight %):
- 0,01 to 0,05% carbon (C),
- 0,1 to 1% silicon (Si),
- 5 to 9% manganese (Mn),
- 19 to 22% chromium (Cr),
- 15 to 18% nickel (Ni),
- 2,5 to 4,5% molybdenum (Mo),
- 0,1 to 0,2% nitrogen (N), and
- iron (Fe) for the rest.

The influence of the various elements present in the wire is explained below (all contents are expressed as % relative to the total weight of wire).Carbon (C)

Carbon is introduced to improve the strength of the weld metal.

### Chromium (Cr) and Molybdenum (Mo)

The elements Cr and Mn are the main alloying elements of high strength austenitic stainless steels. The elements Cr and Mn combine with the carbon of the steel to form carbides that give the steel strength, and therefore also give strength to the weld metal. An excess amount of Cr or Mo in the weld metal causes a deterioration in the toughness properties of the weld metal. Hence measures must be taken to ensure in the joint that there is an amount of Cr between 16 and 22%, and an amount of Mo of maximum 4,5 wt%.

### Silicium (Si)

Silicon acts as a deoxydizing agent in the weld metal. It must therefore be present in a sufficient amount in order to control the oxygen (O) content. If the Si content is too high, the toughness properties are degraded. Thus, it is necessary to limit the amount of Si in the joint to within the range from 0,3 to 1%.

### Nickel (Ni)

The addition of nickel has the effect of promoting the austenitic structure. For this reason, the Ni level must be comprised between 15 and 18%.

### Molybdene (Mo)

Mo has a strong influence on the strength of the weld metal and, consequently, is a very important element for ensuring the correct strength level. On the other hand, a too large amount of Mo may result in high fragility. Therefore, the amount of Mo must be between 2 and 4%.

### Nitrogen (N)

The nitrogen has the effect of promoting the austenitic structure and to give strength at the same time. An excess amount of nitrogen results in weld metal porosity, which will not be accepted by most of the construction codes. The N content is preferably less than 0,25% and typically comprised between 0,14 and 0,2%.

### Illustrative examples

The aim of the tests given below is to show that, when an SA welding process is carried out on workpieces made of austenitic stainless steel using a flux according to the invention, it is possible to obtain a weld joint having a metallurgical composition according to the present invention, in particular a joint for which the tensile strength requirements of the construction industry are achieved, as well as good toughness properties.

The tensile strength of the joint specimens was evaluated by means of tensile tests carried out at a temperature of 23 °C and ultimate tensile strength measurements. The ultimate tensile strength is measured by the maximum stress that a material can withstand while being stretched or pulled before breaking. The toughness of the specimens was also measured using the Charpy V-notch test, which is a standardized high strain-rate test which determines the amount of energy absorbed by a material during fracture. This test was carried out at a temperature of -196 °C.

The tensile and toughness tests were carried out on specimens machined from deposited metal from the center of the weld joint.

The low-nickel austenitic steel workpieces on which the weld metal was deposited were made of the 201LN grade (ASTM A240) and had the composition given in Table 2 below.

**Table 2 : Composition (in wt%) of the tested base metal**

| C | Mn | Si | Cr | Ni | Mo | N | Fe |
|---|---|---|---|---|---|---|---|
| 0,026 | 7,2 | 0,38 | 16,2 | 4,7 | 0,23 | 0,12 | rest |

The fluxes (flux 1, flux 2, flux 3) used in the SA welding had the compositions given in Table 3 below. Carbon was introduced in the flux using carbureted ferrochromium and carbureted ferro-managnese as a carbon-containing metallic compound. The flux 1 contained an amount of 2% ferrochromium and 2% of carbureted ferromanganese The flux 2 contained an amount of 2,5% ferrochromium and 2% of carbureted ferromanganese.This carbureted ferrochromium compound comprised 64 to 70% Cr and 9 to 10% C. The carbureted ferromanganese compound comprised 75 to 80% of manganese and 6 to 7,7% of carbon.

**Table 3 : Composition (in wt%) of the tested fluxes**

| Chemical element | Flux 1 (wt%) Subject of this invention | Flux 2 (wt%) Subject of this invention | Flux 3 (wt %) |
|---|---|---|---|
| MgO | 30,6 | 30,1 | 33,0 |
| CaF₂ | 24,5 | 24,5 | 24,9 |
| Al₂O₃ | 16,0 | 16,0 | 16,1 |
| SiO₂ | 13,0 | 13,0 | 13,5 |
| C | 0,30 | 0,38 | 0,0 |
| CaO | 8 | 8 | 8 |
| MnO | 3 | 3 | 2,5 |
| Na₂O | 1 | 1 | 1 |
| K2O | 2 | 2 | 2 |
| Cr₂O₃ | 1,6 | 2,0 | 0,0 |

**Table 4 : Composition (in wt%) of the tested wires**

| Chemical element | Wire 1 | Wire 2 | Wire 3 | Wire 4 | Wire 5 | Wire 6 |
|---|---|---|---|---|---|---|
| C | 0,026 | 0,025 | 0,021 | 0,042 | 0,013 | 0,05 |
| Mn | 7,4 | 6,8 | 1,8 | 1,4 | 1,51 | 5,8 |
| Si | 0,46 | 0,35 | 0,42 | 0,55 | 0,51 | 0,45 |
| Cr | 19,8 | 23,5 | 18,5 | 18,9 | 22,9 | 17,6 |
| Ni | 16,1 | 22,1 | 11,5 | 9,4 | 8,6 | 7,5 |
| Mo | 3,1 | 3,0 | 2,7 | 0,05 | 3,0 | 0,02 |
| Nb | 0,017 | 0,014 | 0,012 | 0,40 | 0,020 | 0,01 |
| N | 0,22 | 0,28 | 0,05 | 0,04 | 0,14 | 0,01 |

The specimens of deposited metal away from any dilution were obtained by applying the following SA welding parameters:
- SA welding with wires having a diameter of 3,2 mm, the compositions of which are in Table 4, associated with fluxes 1, 2, 3 of Table 3,
- preheating between 25 and 100°C
- 8 to 12 welding passes,
- temperature of the base metal between the welding passes of about 100 °C,
- welding energy of about 1,5 kJ/mm for a welding speed of 55 cm/min,
- DC+ current of 460 A at 30 V, - cooling time of the weld metal from 800 °C to 500 °C of between 7 and 17 s.

Cylindrical tensile specimens were machined longitudinally in the deposited metal, i.e. in the resulting weld joints. The total length of the specimens was 97 mm, the diameter of the gauged part was 10 mm and the length of the gauged part was 50 mm.

Each tensile test was carried out at 23°C. The pull rate was 15MPa/s.

The composition of the tested specimens (in wt% of each element) and the results of tensile strength (Rm, expressed in MPa) and toughness measurements (Kv, expressed in Joules, at -196°C) are given in Table 5 below.

**Table 5 : Composition of the tested welded joints and experimental results**

| **Weld No** | | **C** | **Mn** | **Si** | **Cr** | **Ni** | **Mo** | **Nb** | **N** | **Rm** | **Kv** |
|---|---|---|---|---|---|---|---|---|---|---|---|
| **1** | Flux 1 | 0,115 | 7,2 | 0,54 | 19,3 | 15,1 | 2,7 | 0,014 | 0,18 | 655 | 58 |
| | Wire 1 | | | | | | | | | | |
| **2** | Flux 2 | 0,12 | 7,4 | 0,55 | 20,0 | 16,0 | 2,7 | 0,014 | 0,18 | 680 | 60 |
| | Wire 1 | | | | | | | | | | |
| **3** | Flux 3 | 0,03 | 6,5 | 0,43 | 23,1 | 22,1 | 3,0 | 0,014 | 0,27 | 600 | 62 |
| | Wire 2 | | | | | | | | | | |
| **4** | Flux 3 | 0,02 | 1,5 | 0,55 | 18,0 | 11,5 | 2,7 | 0,012 | 0,05 | 590 | 28 |
| | Wire 3 | | | | | | | | | | |
| **5** | Flux 3 | 0,04 | 1,4 | 0,6 | 18,5 | 9,3 | 0,05 | 0,40 | 0,04 | 610 | 47 |
| | Wire 4 | | | | | | | | | | |
| **6** | Flux 3 | 0,03 | 1,4 | 0,6 | 22,4 | 8,6 | 3,0 | 0,023 | 0,14 | 792 | 20 |
| | Wire 5 | | | | | | | | | | |
| **7** | Flux 3 | 0,05 | 5,6 | 0,5 | 17,3 | 7,4 | 0,01 | 0,01 | 0,01 | 630 | 25 |
| | Wire 6 | | | | | | | | | | |

As can be seen, only tests corresponding to welds No. 1 and 2 gave satisfactory results in terms of tensile strength and toughness properties. This is because an adapted content of carbon was added to the weld metal in order to increase the strength. A too high C content would impair toughness results. These welds offered the best compromise between strength and toughness.

It may also be noted that Flux 2 gave better results in terms of strength than Flux 1, however the toughness was close to its maximum value. In weld No 3, the tensile strength was too low, due to the fact that C was below 0,09% ; the higher chromium and nickel contents compared to weld No 1 and 2 did not help to find the correct strength level.

Weld No 4 was similar to weld No 3: similar level of C but less Cr and 11,5% Ni, and as a consequence more Fe. However the strength level was even lower which clearly shows that a certain chromium and nickel is preferred.

Weld No 5 added 0,4% niobium(Nb) by the wire, however the strength level remained low, again because C was outside the recommended range.

Weld No 6 changed the balance between chromium and nickel: chromium was on a high level and nickel on a relatively low level; high strength was obtained but a nonsufficient toughness.

Weld No 7 had, regarding chromium, nickel and carbon, a composition similar to weld no5, however the Mn content was increased via the wire to 5,6%. This wire has no niobium (Nb) addition. The metal toughness remained too low and the toughness was as well not sufficient.

## Claims

1. An agglomerated welding flux comprising, expressed in % by weight of flux :
- 25 to 35% magnesium oxide (MgO),
- 22 to 35% calcium fluoride (CaF₂),
- 15 to 22% aluminum oxide (Al₂O₃),
- 11 to 17% silicon dioxide (SiO₂),
- at least one metallic compound containing carbon, and
- 0,2 to 0,4% carbon, said carbon being introduced using said least one metallic compound

2. The flux as claimed in claim 1, **characterized in that** said metallic compound comprises 2 to 12% carbon.

3. The flux as claimed either in claims 1 and 2, **characterized in that** it comprises 1,6 to 10% of said metallic compound.

4. The flux as claimed either in claims 1 to 3, **characterized in that** said metallic compound is a ferroalloy.

5. The flux as claimed either in claims 1 to 3, **characterized in that** it comprises at least one metallic compound chosen among: ferrochromium, ferromanganese, cast iron, silicium carbide powder.

6. A process for the submerged-arc welding of at least one workpiece made of austenitic stainless steel, in which a consumable wire and a flux are melt by an electric arc to obtain a welded joint on said at least one workpiece, **characterized in that** the flux is an agglomerated welding flux as claimed in one of claims 1 to 5.

7. The process as claimed in claim 6, **characterized in that** the consumable wire comprises, expressed in % by total weight of wire:
- 0,01 to 0,05% carbon (C),
- 0,1 to 1% silicon (Si),
- 5 to 9% manganese (Mn),
- 19 to 22% chromium (Cr),
- 15 to 18% nickel (Ni),
- 2,5 to 4,5% molybdenum (Mo),
- 0,1 to 0,2% nitrogen (N), and
- iron (Fe) for the rest.

8. The welding process as claimed either in claims 6 and 7, **characterized in that** the work piece comprises, expressed in % by weight of workpiece:
- 16 to 18% Cr,
- 6,4 to 7,5% Mn, and
- 4,0 to 5,0% Ni.

9. The welding process as claimed in claim 8, **characterized in that** the workpiece further comprises, expressed in % by weight of workpiece:
- 0,01 to 0,03 % C,
- 0,1 to 0,75 % Si,
- 0,01 to 0,025% N, and
- iron (Fe) for the rest.

10. A welded joint that can be obtained by the welding process as claimed in either of claims 6 to 8, **characterized in that** it comprises, expressed by weight of joint :
- 17 to 20 % Cr,
- 5 to 8,5% Mn, and
- 14 to 18 % Ni.

11. The welding joint as claimed in claim 10, **characterized in that** the welded joint further comprises, expressed in % by weight of workpiece:
- 0,09 to 0,13 % C,
- 0,3 to 0,7% Si,
- 2 to 4% Mo,
- 0,1 to 0,25% N, and
- iron (Fe) for the rest.

12. The welding joint as claimed either in claims 10 and 11, **characterized in that** the welding joint has a tensile strength of between 650 and 700 MPa at 20 °C.

13. The welding joint as claimed either in claims 10 to 12, **characterized in that** the welding joint has a minimum toughness of 27 J at -196 °C.

14. A workpiece made of austenitic stainless steel comprising 16 to 18% Cr, 4,0 to 5,0% Ni, 6,4 to 7,5% Mn and iron, **characterized in that** it comprises at least one welded joint as claimed in one of claims 10 to 13.
